Europäisches Patentamt

European Patent Office

Office européen des brevets

(11) Publication number: 0 346 079
A1

# EUROPEAN PATENT APPLICATION

(21) Application number: 89305717.4

(51) Int. Cl.⁴: A01K 15/02

(22) Date of filing: 07.06.89

(30) Priority: 09.06.88 US 204690

(43) Date of publication of application:
13.12.89 Bulletin 89/50

(84) Designated Contracting States:
AT CH DE FR GB IT LI SE

(71) Applicant: Westbrook, Shirley L.
722 Robin Drive
Corte Madera California 94925(US)

(72) Inventor: Westbrook, Shirley L.
722 Robin Drive
Corte Madera California 94925(US)

(74) Representative: Williams, Trevor John
J.A. KEMP & CO. 14 South Square Gray's Inn
London WC1R 5EU(GB)

(54) Play enclosure for a feline.

(57) A play sack or bag for a cat is of a crinkly plastic material (12), which is crinkly when agitated and waterproof to withstand laundering. A plastic material (12) is covered with an attractive fabric (14) to enhance its appearance and reinforce it against tearing. The enclosure (22) may also be in the form of a collapsible box that may be folded flat for convenient storage.

FIG. I

## PLAY ENCLOSURE FOR A FELINE

### BACKGROUND OF THE INVENTION

Cats and kittens are widely adopted and loved as household pets. Cats are especially noted for their playful habits and for their ability to entertain themselves for extended periods with exercising toys such as balls and other small objects that can be induced into motion by a cat's playful slap. It is also well known that cats seem to enjoy crawling into and exploring small enclosures, such as open drawers, wastebaskets, shopping bags and the like.

### OBJECTS OF THE INVENTION

It is an object of this invention to provide a play enclosure for a cat or kitten.

It is a further object of this invention to provide a play enclosure for a cat or kitten that is collapsible and easily stored.

It is a further object of this invention to provide a play sack that will amuse a feline or child by reason of its appearance and sound.

. Other objects and advantages of this invention will become apparent from the description to follow, particularly when read in conjunction with the accompanying drawings.

### SUMMARY OF THE INVENTION

In carrying out this invention, I provide a play sack that has as its basic material, a sheet material that is crinkly when agitated and is waterproof to withstand occasional laundering. Covering the waterproof material is a washable fabric on which is embroidered or sewn a design or figure to make the bag attractive for use in a home or apartment. Contained within the bag is a pouch to hold catnip or the like for further attraction to a cat or kitten. In another form of the invention the enclosure is in the form of a collapsible box that may be folded flat to facilitate storage.

### BRIEF DESCRIPTION OF THE DRAWINGS

In the drawings:

FIG. 1 is a view in perspective of a feline play sack enclosure embodying features of this invention;

FIG. 2 is a view in perspective of the kitten play sack partially broken away to show construction thereof;

FIG. 3 is a view in perspective showing a box form of this invention; and

FIG. 4 is an enlarged view in perspective, partially broken away to show the bottom closure construction.

### DESCRIPTION OF PREFERRED EMBODIMENTS

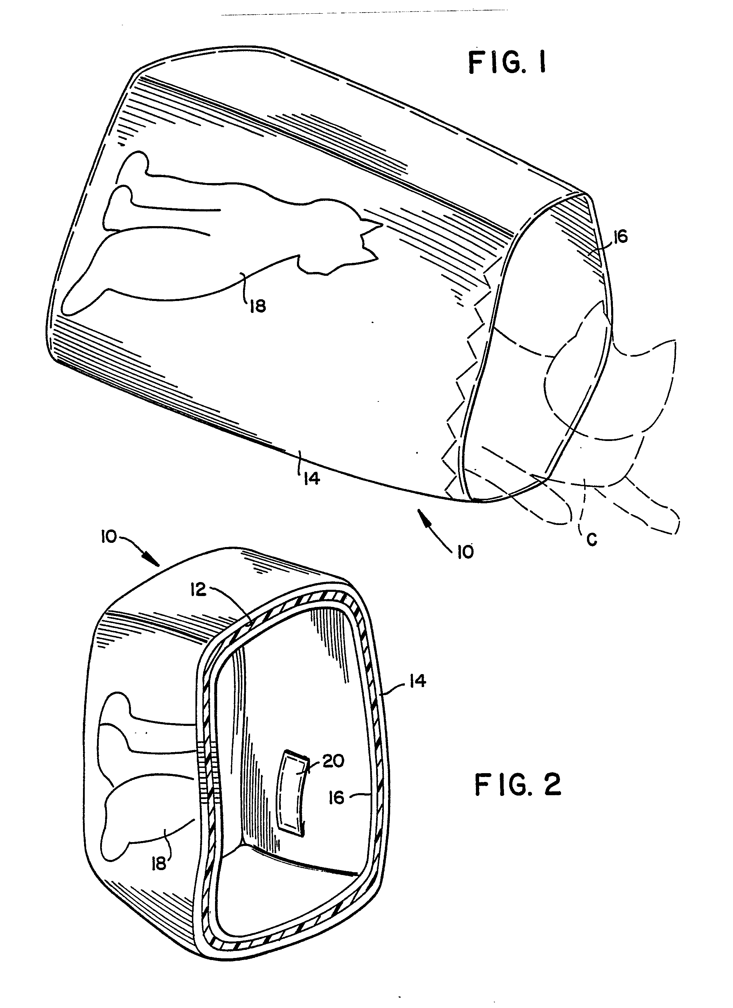

The embodiment of Figs. 1 and 2

In this embodiment 10, the "play house" or enclosure for a cat or kitten C enclosure is in the form of a bag or sack of the general shape and size of a small or medium sized grocery bag. The bag is of "sandwich" construction, and the center or core layer 12 is a plastic bag of a waterproof material that crinkles audibly when agitated or rustled. Such plastic material is commonly found in certain food packages, such as for corn and potato chips and the like. The core layer or sack 12 is also waterproof so that it will not be damaged when the bag is laundered.

On the outside of the play bag is a cover 14, and at the interior thereof is a liner 16, both of a washable fabric material that reinforces the construction of the play bag, enhancing its durability, as well as its appearance. The play sack may be further adorned by designs and/or figures by applying ornamentation, designs or pictures as by sewing, by needlepoint or the like.

Sewn to the inside of the play bag is a pouch 20 into which catnip or the like may be inserted as a further attraction to the feline pet.

In practice, the play sack 10 has proved to be an attractive plaything for young children, as well as for cats and kittens. It is attractive in appearance and may be casually thrown on the floor or furniture of a residence without detracting from the decor. Should the play sack become soiled, it can be laundered without damaging the waterproof core sack 12.

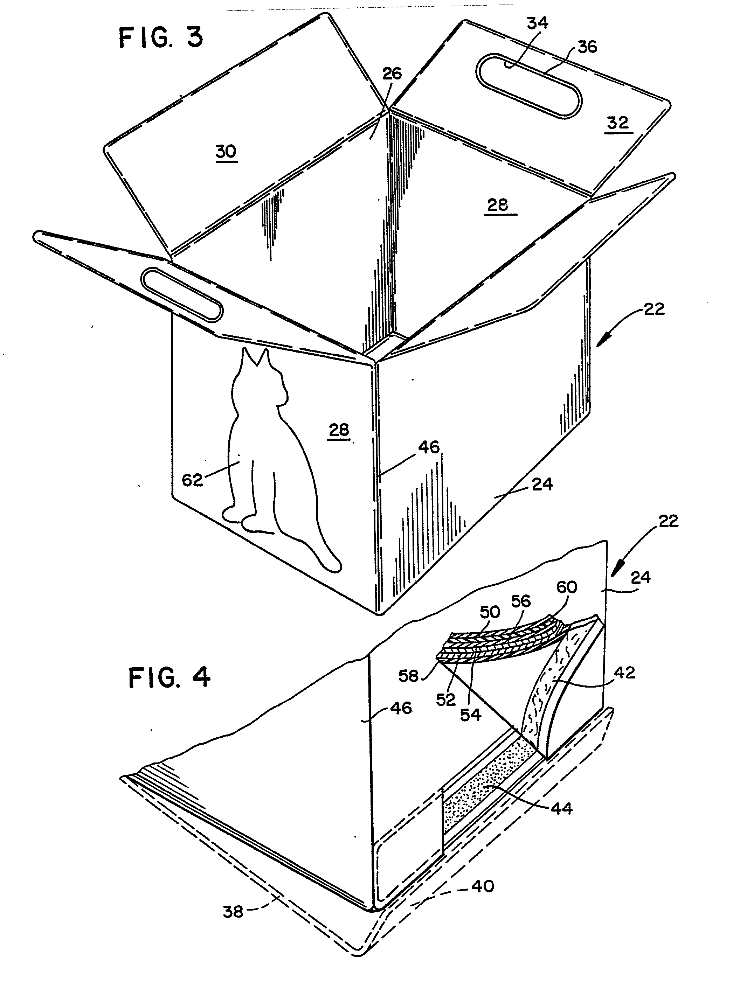

The Embodiment of Figs. 3 and 4

In this embodiment, the play enclosure 22 is in the form of a collapsible box having a front and back 24 and 26 and opposing sides 28 to which are hinged at least partial flaps 30 and 32. The side flaps 32 preferably have hand openings 34, which are reinforced at 36 to facilitate carrying the enclosure in its assembled form.

The bottom closure 38 is preferably a single, full-width flap 40 that may be inserted as shown in FIG. 4 and secured in place, as by complementary Velcro-type fastening means 42 and 44 on the inside of the front panel 24 and on the flap 40 of the bottom closure. It is apparent that when the bottom closure 38 is opened, the box may be folded at its four corners 46 and collapsed to a flattened position for convenient storage.

As in the previous embodiment, the basic box is of a sheet material, such as cardboard 48 with both an outer covering 50 and an inner lining 52 of an attractive fabric, preferably padded inside and out 54 and 56 with a cotton batting or the like. Preferably, a sub-lining 58 of a crinkly plastic material is added just inside the fabric lining 52. In addition, a second layer 60 of the plastic material may be applied under the fabric 50. On the outside a suitable design or figure 60 may be applied to the outside as by sewing or needlepoint to render the box enclosure attractive for interior use.

## Claims

1. An open-ended play enclosure for a cat comprising: a container having side walls and a bottom panel; said walls being formed of a core sheet material with an inner lining and an outer covering or fabric.

2. A play enclosure as defined in claim 1, wherein said fabric is washable.

3. A play enclosure as defined in claim 1 or 2, wherein said container is in the form of a gab and said core sheet material crinkles when agitated.

4. A play enclosure as defined in claim 1, 2 or 3, wherein said core sheet material is of a waterproof plastic.

5. A play enclosure as defined in any preceding claim, including a pouch in said enclosure for catnip.

6. A play enclosure as defined in any preceding claim, wherein said side walls are relatively rigid to form a box, and said bottom panel is hinged at one end to a side wall and has a flap on the other end, complementary releasable fastening means being provided on said flap and on the side wall opposite said hinge connection.

7. A play enclosure as defined in any preceding claim, wherein top panels are hingedly connected to the upper ends of said side walls and handle means are provided on at least one of said top panels.

8. A play bag comprising: a core sack of a sheet material that crinkles when agitated; said sheet material being washable; and an outer covering of a washable fabric.

FIG. 1

18

16

14

10

10

C

10

12

14

20

16

18

FIG. 2

FIG. 3

34

36

26

32

30

28

22

28

62

46

24

FIG. 4

22

50   56   60

58

24

52   54

42

46

44

38

40

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | US-A-4008687 (KEYS)<br>* column 2, line 27 - line 50; figure 4 *<br>--- | 1-4, 6, 8 | A01K15/02 |
| X | US-A-4576116 (BINKERT)<br>* column 2, line 26 - line 66 *<br>--- | 1, 2, 5, 7 | |
| X | GB-A-1274337 (EGREMONT)<br>* page 2, line 37 - line 46 *<br>--- | 1, 4 | |
| A | US-A-2854948 (DRAYSON)<br>* the whole document *<br>--- | 1-3, 8 | |
| A | US-A-4391223 (HOLLAND ET AL.)<br>* abstract *<br>--- | 1, 6, 7 | |
| A | US-A-3552356 (ROSENTHAL)<br>* the whole document *<br>--- | 1, 4, 8 | |
| A | US-A-4177761 (BELLOCCHI)<br>* the whole document *<br>----- | 1, 4, 5, 8 | TECHNICAL FIELDS SEARCHED (Int. Cl.4 )<br><br>A01K |

The present search report has been drawn up for all claims

| Place of search | Date of completion of the search | Examiner |
|---|---|---|
| THE HAGUE | 14 SEPTEMBER 1989 | BEUGELING G.L.H. |

EPO FORM 1503 03.82 (P0401)